# EUROPEAN PATENT SPECIFICATION

(11) **EP 1 199 502 B1**
(45) Date of publication and mention of the grant of the patent: **21.03.2007**
(21) Application number: 01124978.6
(22) Date of filing: 19.10.2001
(51) Int. Cl.: E03D 1/32, E03D 9/14, F16K 47/02, F16K 31/24

(54) **Low-noise feed valve for a flush tank**
Geräuscharmes Füllventil eines Toilettenspülkastens
Soupape de remplissage à bruit faible pour une chasse d'eau

(30) Priority: 20.10.2000 IT MI002272
(43) Date of publication of application: 24.04.2002
(73) Proprietor: Oliveira & Irmao S.A., 3800 Aveiro (PT)
(72) Inventor: Moura de Oliveira, Antonio Manuel, 3800 Aveiro (PT)
(74) Representative: Cerbaro, Elena

(56) References cited:
- EP-A- 0 369 404
- US-A- 2 615 467
- US-A- 3 902 521
- US-A- 5 738 141
- US-A- 5 904 176

## Description

The present invention relates to a low-noise feed valve for a flush tank.

As is known, flush tanks are fitted with a feed valve connected to the water mains to fill the tank after each flush; and numerous types of feed valves are known designed to at least partly solve the problem of reducing the noise made by the water flowing in through the valve. One low-noise feed valve is described, for example, in European Patent n. 369404, and comprises a metal fitting for connection to the water mains; a diaphragm valve assembly; and a noise-damping member housed inside the fitting and defined by two separate components: a rigid inner basket surrounded by a sleeve of elastomeric material housed inside the fitting. The lateral wall of the basket has a succession of longitudinal slits; and the water flowing through the fitting is intercepted by the end wall of the basket and deflected radially through the slits before reaching the diaphragm valve assembly. The noise-damping member of this type of feed valve has the obvious drawback of comprising two separate components, which must be manufactured separately from different materials and then assembled, thus increasing overall production cost. Moreover, the basket is complicated in design, which poses serious manufacturing problems (e.g. complex dies or machining) which further increase the end cost of the product.

It is an object of the present invention to provide a flush tank feed valve designed to eliminate the drawbacks of the known feed valve described briefly above, and which, in particular, provides for effectively reducing noise, while at the same time being cheap and easy to produce.

According to the present invention, there is provided a low-noise feed valve for a flush tank, comprising a fitting having a first end for connection to an external supply conduit; a noise-damping member housed in a seat formed coaxially inside said fitting; and a diaphragm valve assembly downstream from said noise-damping member; said noise-damping member having a wall positioned crosswise with respect to said seat to intercept a stream of water flowing through said fitting; and the feed valve being characterized in that said noise-damping member is a single one-piece member comprising a number of arms, which project perpendicularly and dial-fashion from said wall towards said first end of the fitting, are spaced circumferentially apart, and have separate respective free ends; and connecting means for connection to said seat, and which rest directly on an inner lateral surface of said seat to maintain a predetermined radial clearance between said arms and said inner lateral surface.

As such, the noise-damping member is defined by a single one-piece member connected directly to the fitting; the feed valve according to the invention comprises one component less than the known solution, and is therefore cheaper and easier to produce; and the structure of the noise-damping member is easy to produce, e.g. by molding, and poses none of the production problems typically associated with the basket of the known state of the art.

Tests have shown the feed valve according to the invention to be fully effective in reducing noise to a level comparable with that of the valve described in European Patent n: 369404. In other words, effective noise damping has surprisingly been discovered possible even without the sleeve of elastomeric material provided in the known state of the art, providing the noise-damping member has the structural characteristics claimed herein.

A non-limiting embodiment of the present invention will be described by way of example with reference to the accompanying drawings, in which:
Figure 1 shows an overall view in perspective of a feed valve in accordance with the invention;
Figure 2 shows a larger-scale longitudinal section of a detail of the Figure 1 feed valve;
Figure 3 shows a larger-scale, exploded view in perspective of a number of components of the Figure 1 feed valve.

With reference to the accompanying drawings, number 1 indicates as a whole a feed valve for a flush tank (not shown). Feed valve 1 comprises a body 2 housing a diaphragm valve assembly 3 and a conveyor disk 4, both substantially known and therefore not described in detail for the sake of simplicity. To body 2 are connected in known manner a tubular fitting 5, having an externally threaded first end 6 for connection to an external supply conduit (not shown); and an inflow tube 7 perpendicular to fitting 5 and fitted coaxially and in axially sliding manner with a float 8 connected mechanically by an adjustable rod 9 to a lever 10 controlling diaphragm valve assembly 3.

Fitting 5 is made of metal (e.g. brass) and has, at a second end 12 opposite first end 6, an annular front edge 13 and a radially outer collar 14 for connection to body 2. Annular front edge 13 rests against a face 15 of conveyor disk 4 with the interposition of a sealing ring 16 of elastomeric material. More specifically, sealing ring 16 is defined by flat parallel annular faces, and is inserted inside an annular dead seat 17 formed in face 15 of conveyor disk 4 and defined by concentric circumferential projections 18, 19; collar 14 is engaged by a known ring nut 20 screwed on to body 2; and sealing ring 16 is gripped between fitting 5 and conveyor disk 4.

A substantially cylindrical seat 21 is formed coaxially inside fitting 5, at second end 12, is defined by a radially inner lateral surface 22, and has, at respective opposite axial ends, a circular access opening 23, and an axial shoulder 24 defined by a variation in the inside diameter of fitting 5.

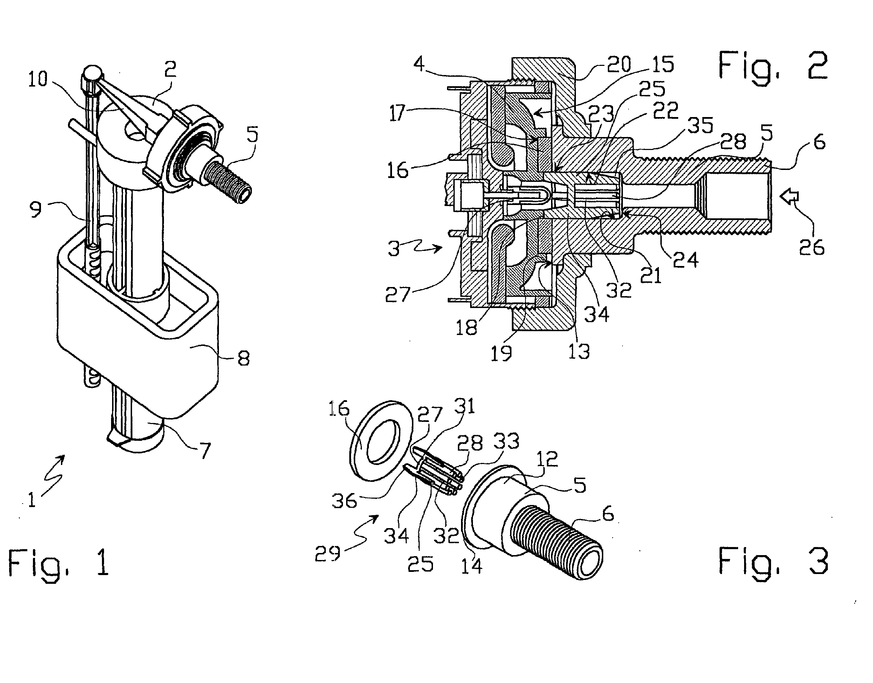

Seat 21 houses a noise-damping member 25; and diaphragm valve assembly 3 is located downstream from noise-damping member 25 with respect to the direction of a stream of water - indicated by arrow 26 in Figure 2 - flowing through fitting 5. Noise-damping member 25 is defined by a one-piece, substantially basket-shaped body made of substantially rigid polymer material, and comprises a wall 27 defined by a circular disk with flat parallel faces, and positioned crosswise with respect to seat 21 to intercept the stream of water 26 flowing through fitting 5; a number of arms 28 projecting perpendicularly and dial-fashion from wall 27 towards first end 6 of fitting 5 (i.e. in the opposite direction to the stream of water 26); and connecting means 29 for connection to seat 21.

In the example shown, arms 28 are eight in number, and are defined by respective substantially parallel, solid cylindrical rods with a circular cross section. Arms 28 are arranged dial-fashion at, and substantially flush with, a peripheral edge 31 of wall 27; are spaced apart circumferentially and separated by respective longitudinal gaps 32 as long as arms 28 themselves; have respective separate rounded free ends 33; and are separated by a distance substantially equal to or less than the diameter of arms 28 themselves.

Connecting means 29 comprise a number of ribs 34 carried by wall 27, spaced circumferentially apart, and projecting radially from peripheral edge 31 of wall 27 to rest directly on inner lateral surface 22 of seat 21. Ribs 34 are radially outer with respect to arms 28 so as to maintain, when resting on inner lateral surface 22, a predetermined radial clearance between arms 28 and inner lateral surface 22. Between arms 28 and inner lateral surface 22, there is defined an annular gap 35. Four ribs 34 are preferably provided and spaced 90° apart along peripheral edge 31. Ribs 34 also project axially from wall 27, on the opposite side to arms 28, so that respective free ends 36 of ribs 34 rest on radially inner projection 18 of face 15 of conveyor disk 4.

In actual use, the stream of water 26 is intercepted by wall 27 and deflected radially outwards through gaps 32 between arms 28. The water then strikes inner lateral surface 22 of seat 21 directly and, through annular gap 35, flows past wall 27 and in an axial direction between ribs 34 to diaphragm valve assembly 3 (which operates in known manner not described for the sake of simplicity).

Clearly, changes may be made to the feed valve as described and illustrated herein without, however, departing from the scope of the present invention.

## Claims

1. A low-noise feed valve (1) for a flush tank, comprising a fitting (5) having a first end (6) for connection to an external supply conduit; a noise-damping member (25) housed in a seat (21) formed coaxially inside said fitting; and a diaphragm valve assembly (3) downstream from said noise-damping member;, said noise-damping member (25) having a wall (27) positioned crosswise with respect to said seat (21) to intercept a stream of water (26) flowing through said fitting; and the feed valve being **characterized in that** said noise-damping member (25) is a single one-piece member comprising a number of arms (28), which project perpendicularly and dial-fashion from said wall (27) towards said first end (6) of the fitting (5), are spaced circumferentially apart, and have separate respective free ends (33); and connecting means (29) for connection to said seat (21), and which rest directly on an inner lateral surface (22) of said seat (21) to maintain a predetermined radial clearance between said arms (28) and said inner lateral surface (22).

2. A feed valve as claimed in Claim 1, **characterized in that** said connecting means (29) comprise a number of ribs (34) carried by said wall (27), spaced circumferentially apart, and projecting radially from a peripheral edge of said wall (27) to rest on said inner lateral surface (22).

3. A feed valve as claimed in Claim 2, **characterized in that** said ribs (34) project axially from said wall (27), on the opposite side to said arms (28), and are radially outer with respect to said arms (28).

4. A feed valve as claimed in one of the foregoing Claims, **characterized in that** said arms (28) are defined by respective solid cylindrical rods having a circular cross section, and are substantially parallel to one another; the distance between said arms (28) being substantially equal to or less than the diameter of said arms (28); and said free ends (33) of the arms being rounded.

5. A feed valve as claimed in one of the foregoing Claims, **characterized in that** said seat (21) is a substantially cylindrical seat formed at a second end (12), opposite said first end (6), of said fitting (5); said wall (27) of the noise-damping member (25) being defined by a circular disk; and said arms (28) being arranged dial-fashion at a peripheral edge (31) of said disk and substantially flush with said peripheral edge (31).

6. A feed valve as claimed in one of the foregoing Claims, **characterized in that** said fitting (5) is made of metal material; and said noise-damping member (25) is defined by a one-piece body made of substantially rigid polymer material.

## Patentansprüche

1. Geräuscharmes Füll- bzw. Zuführventil (1) für einen Toilettenspülkasten, umfassend eine Verschraubung (5), die ein erstes Ende (6) für die Verbindung mit einer externen Zufuhrleitung umfasst; ein geräuschdämpfendes Element (25), das in einem Sitz (21) untergebracht bzw. aufgenommen ist, der koaxial innerhalb der Verschraubung gebildet ist; und eine Membranventileinheit (3) stromabwärts vom geräuschdämpfenden Element; wobei das geräuschdämpfende Element (25) eine Wand (27) aufweist, die quer bezüglich des Sitzes (21) positioniert ist, um einen Wasserstrom (26) abzufangen, der durch die Verschraubung fließt; wobei das Füllventil **dadurch gekennzeichnet ist, dass** das geräuschdämpfende Element (25) ein einzelnes einteiliges Element ist, das eine Anzahl an Armen (28) umfasst, die senkrecht und wählscheibenartig von der Wand (27) gegen das erste Ende (6) der Verschraubung (5) vorragen und umlaufend bzw. ringsum voneinander beabstandet sind und separate einzelne freie Enden (33) aufweisen; sowie ein Verbindungsmittel (29) für die Verbindung mit dem Sitz (21), die direkt an einer inneren Seitenfläche (22) des Sitzes (21) aufsitzen, um einen vorbestimmten radialen Abstand bzw. Zwischenraum zwischen den Armen (28) und der inneren Seitenfläche (22) beizubehalten.

2. Füllventil nach Anspruch 1, **dadurch gekennzeichnet, dass** das Verbindungsmittel (29) eine Anzahl an Rippen bzw. Rillen (34) umfasst, die von der Wand (27) getragen werden und umlaufend bzw. ringsum voneinander beabstandet sind und radial von einer Umfangskante der Wand (27) vorragen, um auf der inneren Seitenfläche (22) aufzusitzen.

3. Füllventil nach Anspruch 2, **dadurch gekennzeichnet, dass** die Rippen bzw. Rillen (34) axial von der Wand (27) auf der gegenüberliegenden bzw. entgegengesetzten Seite der Arme (28) vorragen und sich bezüglich der Arme (28) radial außen befinden.

4. Füllventil nach einem der vorangegangenen Ansprüche, **dadurch gekennzeichnet, dass** die Arme (28) von entsprechenden festen zylinderförmigen Rundstäben mit kreisförmigem Querschnitt definiert bzw. abgegrenzt sind und im Wesentlichen parallel zu einander verlaufen; wobei der Abstand zwischen den Armen (28) im Wesentlichen gleich oder kleiner ist als der Durchmesser der Arme (28) und die freien Enden (33) der Arme gerundet sind.

5. Füllventil nach einem der vorangegangenen Ansprüche, **dadurch gekennzeichnet, dass** der Sitz (21) ein im Wesentlichen zylinderförmiger Sitz ist, der an einem zweiten Ende (12) der Verschraubung (5) gebildet ist, das dem ersten Ende (6) gegenüberliegt bzw. entgegengesetzt ist; wobei die Wand (27) des geräuschdämpfenden Elements (25) von einer kreisförmigen Scheibe definiert bzw. abgegrenzt ist und die Arme (28) an einer Umfangskante (31) der Scheibe wählscheibenartig angeordnet sind und im Wesentlichen bündig mit der Umfangskante (31) abschließen.

6. Füllventil nach einem der vorangegangenen Ansprüche, **dadurch gekennzeichnet, dass** die Verschraubung (5) aus Metall besteht und das geräuschdämpfende Element (25) von einem einteiligen Körper aus im Wesentlichen harten Polymermaterial definiert bzw. abgegrenzt ist.

## Revendications

1. Soupape de remplissage à faible bruit (1) pour un réservoir de chasse d'eau, comprenant un raccord (5) ayant une première extrémité (6) pour le raccordement à un conduit d'alimentation externe ; un élément d'amortissement de bruit (25) logé dans un siège (21) formé de manière coaxiale à l'intérieur dudit raccord ; et un ensemble de robinet à membrane (3) en aval dudit élément d'amortissement de bruit ; ledit élément d'amortissement de bruit (25) ayant une paroi (27) positionnée transversalement par rapport audit siège (21) pour intercepter un courant d'eau (26) s'écoulant à travers ledit raccord ; et la soupape de remplissage étant **caractérisée en ce que** ledit élément d'amortissement de bruit (25) est un élément d'un seul tenant comprenant un certain nombre de bras (28) qui font saillie perpendiculairement et à la manière d'un cadran à partir de ladite paroi (27) vers ladite première extrémité (6) du raccord (5), sont espacés de manière circonférentielle, et ont des extrémités libres respectives séparées (33) ; et des moyens de raccordement (29) pour le raccordement audit siège (21) et qui reposent directement sur une surface latérale interne (22) dudit siège (21) pour maintenir un jeu radial prédéterminé entre lesdits bras (28) et ladite surface latérale interne (22).

2. Soupape de remplissage selon la revendication 1, **caractérisée en ce que** lesdits moyens de raccordement (29) comprennent un certain nombre de nervures (34) supportées par ladite paroi (27), espacées de manière circonférentielle, et faisant saillie radialement à partir d'un bord périphérique de ladite paroi (27) pour reposer sur ladite surface latérale interne (22).

3. Soupape de remplissage selon la revendication 2, **caractérisée en ce que** lesdites nervures (34) font saillie de manière axiale à partir de ladite paroi (27) sur le côté opposé desdits bras (28), et sont radialement vers l'extérieur par rapport auxdits bras (28).

4. Soupape de remplissage selon l'une des revendications précédentes, **caractérisée en ce que** lesdits bras (28) sont définis par des tiges cylindriques pleines respectives ayant une section transversale circulaire, et sont sensiblement parallèles l'une par rapport à l'autre ; la distance entre lesdits bras (28) étant sensiblement égale ou inférieure au diamètre desdits bras (28), et lesdites extrémités libres (33) des bras étant arrondies.

5. Soupape de remplissage selon l'une des revendications précédentes, **caractérisée en ce que** ledit siège (21) est un siège sensiblement cylindrique formé au niveau d'une seconde extrémité (12), opposée à ladite première extrémité (6) dudit raccord (5) ; ladite paroi (27) de l'élément d'amortissement de bruit (25) étant définie par un disque circulaire ; et lesdits bras (28) étant agencés à la manière d'un cadran au niveau d'un bord périphérique (31) dudit disque et sensiblement de niveau avec ledit bord périphérique (31).

6. Soupape de remplissage selon l'une des revendications précédentes, **caractérisée en ce que** ledit raccord (5) est réalisé avec un matériau métallique ; et ledit élément d'amortissement de bruit (25) est défini par un corps d'un seul tenant réalisé avec un matériau polymère sensiblement rigide.
